# EUROPÄISCHE PATENTSCHRIFT

(11) **EP 2 520 010 B1**
(45) Veröffentlichungstag und Bekanntmachung des Hinweises auf die Patenterteilung: **07.11.2018**
(21) Anmeldenummer: 10796083.3
(22) Anmeldetag: 29.12.2010
(51) Int. Cl.: H02K 21/22, H02K 1/14, H02K 1/20, H02K 3/52

(54) **TRANSVERSALFLUSSMASCHINE**
TRANSVERSAL FLUX MACHINE
MACHINE À FLUX TRANSVERSAL

(30) Priorität: 30.12.2009 DE 102009060959
(43) Veröffentlichungstag der Anmeldung: 07.11.2012
(73) Patentinhaber: SEG Automotive Germany GmbH, 70499 Stuttgart (DE)
(72) Erfinder: GRUENDL, Andreas, 82319 Starnberg (DE); HOFFMANN, Bernhard, 82319 Starnberg (DE); RASCH, Reinhard, 82229 Hechendorf (DE); LOOS, Heidimarie, 82327 Tutzing (DE)
(74) Vertreter: Steinbauer, Florian
(86) Internationale Anmeldenummer: PCT/EP2010/070837
(87) Internationale Veröffentlichungsnummer: WO 2011/080294

(56) Entgegenhaltungen:
- EP-A2- 1 931 013
- WO-A1-2007/031381
- US-A1- 2006 226 717
- US-B1- 7 579 742
- Michael Bork: "Entwicklung und Optimierung einer fertigungsgerechten Transversalflussmaschine", 28. Januar 1997 (1997-01-28), Fakultät für Elektrotechnik, RWTH Aachen, XP002671424, ISBN: 3-8265-2639-2 Seiten 73-84, in der Anmeldung erwähnt Abbildung 4.8

## Beschreibung

### Stand der Technik

Aus der Dissertation "Entwicklung und Optimierung einer fertigungsgerechten Transversalflussmaschine", Verfasser Hr. Michael Bork, Shaker-Verlag, Veröffentlichungsjahr 1997, ist der Aufbau einer Transversalflussmaschine bekannt, siehe dort insbesondere Seite 84.

Aus der EP 1931013 A2 ist eine elektrische Maschine mit einem Innenläufer bekannt. Es wird von beiden axialen Seiten des Läufers Luft angesaugt, die nach radial außen weggeleitet wird. Von einer axialen Seite wird ein Teil des Luftstroms zwischen dem Innenläufer und dem Ständer zur anderen axialen Seite geleitet.

Es besteht die Aufgabe, die Kühlung einer Transversalflussmaschine zu verbessern.

### Offenbarung der Erfindung

Es zeigen:
Figur 1 einen Längsschnitt einer ersten Ausführung einer elektrischen Maschine,
Figur 2 eine Stirnansicht auf eine elektrische Maschine auf einen Flansch ohne Elektronik,
Figur 3 eine räumliche Ansicht der Maschine aus Figur 2,
Figur 4 eine räumliche Ansicht der Maschine aus Figur 1,
Figur 5 eine Rückansicht der elektrischen Maschine auf einen Flansch bei demontierter Elektronik,
Figur 6A einen Längsschnitt durch den Ständer,
Figur 6B eine Einzelheit des Ständers aus Figur 6A,
Figur 7 eine räumliche Ansicht des Ständers,
Figur 8 eine weitere räumliche Ansicht des Ständers aus Figur 7,
Figur 9 einen Lüfter,
Figur 10 eine Ansicht in einen Hohlraum eines Außenläufers,
Figur 11 zwei Ansichten des Außenläufers, wobei in der oberen Bildhälfte eine Außenansicht und in der unteren Bildhälfte eine Längsschnittansicht dargestellt ist,
Figur 12 eine räumliche Ansicht einer Ständerwicklung,
Figur 13A einen Querschnitt der Ständerwicklung,
Figur 13B und 13C weitere mögliche Querschnitte der Ständerwicklung,
Figur 14 einen Querschnitt eines Drahtes einer Litze,
Figur 15 einen weiteren Querschnitt der Ständerwicklung,
Figur 16 eine Einzelheit der Ständerwicklung
Figur 17a) bis g) verschiedene Verfahrensschritte zur Herstellung einer Ständerwicklung,
Figur 18a) bis e) zwei verschiedene Ständerwicklungen, verschiedene Verfahrensschritte zur Herstellung einer Ständerwicklung, sowie zwei verschiedene Querschnitte der Ständerwicklungen,
Figur 19 drei Anschlussteile der Ständerwicklungen in Sternpunktverschaltung,
Figur 20 eine Variante eines Ständers,
Figur 21 eine zweite Ausführung einer elektrischen Maschine in Gestalt einer Transversalflussmaschine.

### Ausführungsformen der Erfindung

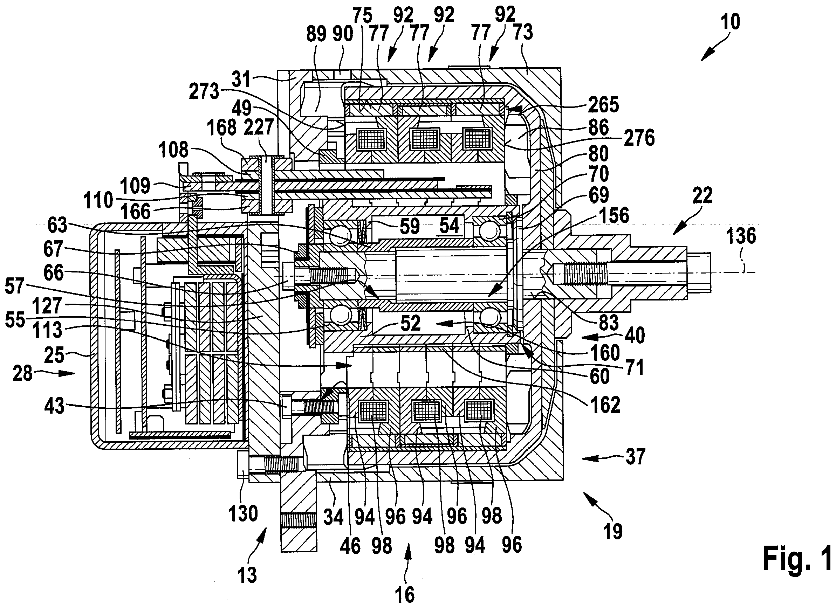

In Figur 1 ist eine elektrische Maschine in Gestalt einer Transversalflussmaschine 10 dargestellt. Wie viele elektrische Maschinen, weist auch diese einen Ständer 13 und einen Läufer, ausgeführt als sogenannter Außenläufer 16 auf. Beide Teile sind in einem Gehäuse 19 angeordnet. Mittels einer Welle 22 wird der Außenläufer 16 angetrieben. Die Welle 22 wird dabei beispielsweise mittels einer Riemenscheibe oder ein Zahnrad oder ein sonstiges Drehmomentübertragungsteil angetrieben. Auf der in der Figur 1 linken Seite ist unter einer Abdeckhaube 25 eine Elektronik 28 angeordnet, beispielsweise ein Passivgleichrichter oder ein Aktivgleichrichter.

An einem Flansch 31 stützt sich ein in etwa topfförmiger Gehäusemantel 34 ab, der einen ringförmigen Kragen 37 mit einer zentralen Öffnung 40 hat. Durch die Öffnung 40 erstreckt sich die Welle 22.

Am Flansch 31 stützt sich darüber hinaus auch der Ständer 13 ab. Der Ständer 13 ist mittelbar mittels sieben Schrauben 43 am Flansch 31 befestigt. Die Schrauben 43 ragen durch je eine Durchgangsöffnung im Flansch 31 und greifen in je eine Gewindebohrung 46 eines weiteren Flansches 49. Dieser weitere Flansch 49 ist einstückig mit einer zentralen Hülse 52 verbunden, die ebenso zentrale Aufgaben wahrnimmt.

Die Hülse 52 trägt über ihre Innenkontur 54 zwei Wälzlager 55 und 56, die hier als Rillenkugellager ausgeführt sind. Die Innenkontur 54 weist zwei Ringstege 59 und 60 auf. Der Ringsteg 60 dient dem Wälzlager 56 als Anschlag. Zwischen dem Ringsteg 59 und dem Wälzlager 55 ist zur Erzeugung einer axialen Vorspannung auf die beiden Wälzlager 55 und 56 eine Tellerfeder 57 zwischen Ringsteg 59 und Wälzlager 55 eingespannt. Über diese Wälzlager 55 und 56 ist die Welle 22 ortsfest und drehbar gelagert. Die Welle 22 ist zwischen Lagersitzen für die Wälzlager 55 und 56 abgesetzt. Zwischen den beiden Wälzlagern 55 und 56 ist eine Distanzhülse 63 auf die Welle 22 geschoben, damit ein definierter Abstand zwischen den Wälzlagern 55 und 56 eingestellt ist. Beide Wälzlager 55 und 56, bzw. deren hier nicht näher bezeichnete Innenringe, sind mittels der Distanzhülse 63, einer Spannhülse 66 und einer Spannschraube 67 miteinander und gegen einen Bund 69 verspannt. Ein Außenring 70 des Wälzlagers 56 ist durch einen Innensicherungsring 71 in seiner Position gesichert.

Der Bund 69 hat zudem die Aufgabe, die Wälzlager 55 und 56 zu schützen, aber auch die Aufgabe, einen Anschlag für den Außenläufer 16 zu bilden. Der Außenläufer 16 weist eine topfartige Gestalt auf. Ein zylindermantelförmiger Abschnitt 73 des Außenläufers 16 trägt auf seiner zylindrischen Innenseite 75 in drei axial nacheinander angeordneten Reihen Permanentmagnete 77. An den zylindermantelförmigen Abschnitt 73 des Außenläufers 16 schließt sich an einem axialen Ende nach radial innen erstreckt eine Art Gehäuseboden 80 an, der mit einer zentralen Bohrung 83 auf der Welle 22 sitzt. An einer Innenseite des Gehäusebodens 80 ist ein radial wirkender Lüfter 86 befestigt. Am zur Elektronik 28 gerichteten zylindermantelförmigen Abschnitt 73 ist ein weiterer Lüfter 89 befestigt, der als in radialer Richtung schmaler Ring ausgeführt ist. Dieser Lüfter 89 dreht sich in einer Nut, die in einer zum Lüfter 89 gerichteten Stirnseite des Flanschs 31 eingearbeitet ist. Radial außerhalb dieses Lüfters 89 ist im Gehäusemantel 34 ringsum eine Reihe von Lüftungsöffnungen 90 angeordnet.

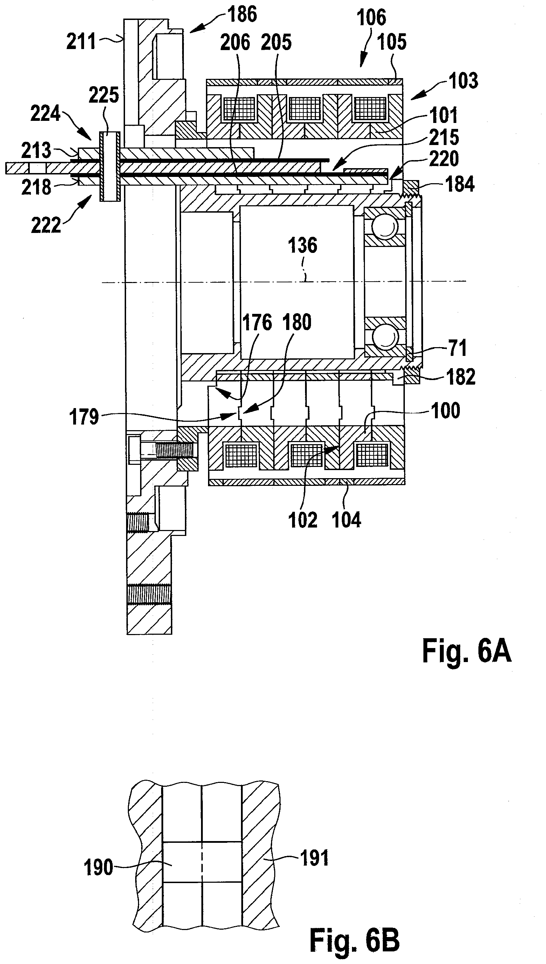

Radial innerhalb des zylindermantelförmigen Abschnitts 73 ist der Ständer 13 angeordnet. Dieser Ständer 13 umfasst drei einzelne spezielle Ringsysteme 92. Ein jedes Ringsystem 92 weist zwei Halbringe 94 und 96 auf, die zwischen sich eine Ringspule als Ständerwicklung 98 aufnehmen. Die Ständerwicklung 98 ist jeweils von zwei Halbjochen 100 und 101, zwei Ringwänden 102 und 103 und Klauenpolen 104 und 105 umgeben bzw. umgriffen, siehe auch Figur 6A. Die Klauenpole 104 und 105 wechseln dabei einander in Umfangsrichtung ab. Dabei ist ein Aufnahmeraum 106 für die Ständerwicklung 98 gebildet. Der Aufnahmeraum 106 hat einen bestimmten Querschnitt, begrenzt durch die Halbjoche 100 und 101, die beiden Ringwände 102 und 103 und die Klauenpole 104 und 105. In diesem Aufnahmeraum 106, der in diesem Beispiel rechteckig ist, sitzt die Ständerwicklung 98 mit einem vorgeformten Querschnitt. Der Querschnitt der Ständerwicklung 98 an den Querschnitt des Aufnahmeraums 106 angepasst ist.

Radial innerhalb des Ständers 13, d. h. zwischen den Halbjochen 100 und 101, die insgesamt ein Innenjoch 107 sind, und der Hülse 52, befinden sich konzentriert angeordnet drei Ausgänge 108, 109 und 110 der insgesamt drei Ständerwicklungen 98. Ein jeder Ausgang 108, 109 und 110 ist dabei einer Ständerwicklung 98 zugeordnet. Die drei Ständerwicklungen 98 sind in einem Sternpunkt verschaltet, hierauf wird weiter unten eingegangen.

Radial innerhalb des Ständers 13, d. h. ebenfalls zwischen den Halbjochen 100 und 101 und der Hülse 52, befinden sich Lüftungskanäle 113, die Teil eines Lüftungssystems sind, auf das ebenfalls weiter unten eingegangen wird.

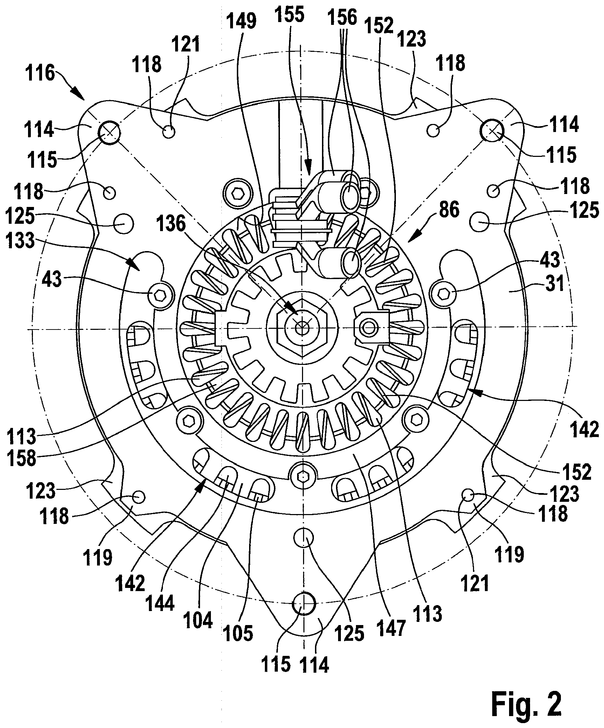

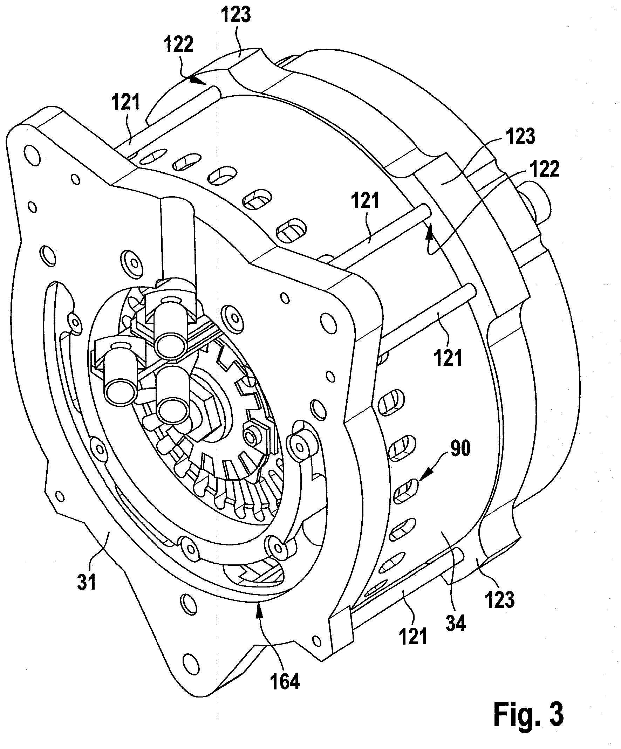

Figur 2 zeigt eine Stirnansicht der elektrischen Maschine auf den Flansch 31 bei demontierter Elektronik. Der Flansch 31 weist auf den Uhrzeit-Positionen "halb zwei"-, "sechs"- und "halb elf"-Uhr je einem Befestigungsauge 114 Durchgangsloch 115 auf. Diese Durchgangslöcher 115 sind vorzugsweise und wie hier dargestellt mit Innengewinden 116 ausgestattet und dienen der Befestigung der elektrischen Maschine an ihrer Umgebung. Sechs weitere Durchgangslöcher 118, von denen je zwei Mal zwei Durchgangslöcher 118 in den Befestigungsaugen 114 und je ein Durchgangsloch 118 in einzelnen Befestigungsaugen 119 angeordnet sind, dienen der Befestigung des Gehäusemantels 34 am Flansch 31. Hierzu sind entsprechend sechs Zuganker 121, ausgeführt als Langschrauben, siehe auch Figur 3, durch weitere Durchgangslöcher 122 hindurchgesteckt, die in Ringsegmenten 123 eingearbeitet sind. Durch Beaufschlagung der Zuganker 121 mit einem ausreichenden Drehmoment, wird der Gehäusemantel 34 am Flansch 31 positionssicher gehalten.

Drei auf den Uhrzeit-Positionen "zwei"-, "sechs"- und "zehn"-Uhr befindliche Gewindebohrungen 125 dienen der Befestigung einer beispielsweise in Figur 1 dargestellten Kühlplatte 127 mittels Schrauben 130. Die Kühlplatte 127 selbst dient der Kühlung der Elektronik 28.

Fünf der sieben Schrauben 43 ragen in eine ringsegmentförmige Nut 133, die sich cirka 270° um eine Drehachse 136 erstreckt. Von einem Grund 139 der Nut 133 gehen vier ebenfalls ringsegmentförmige Langlöcher 142 aus, durch die der Blick auf Klauenpole 104 und 105 sowie eine Vergussmasse 144 frei ist. Die Vergussmasse 144 bedeckt die Ständerwicklungen 98. Ein ringförmiger Steg 147 begrenzt den Flansch 31 nach radial innen und begrenzt nach radial außen eine kreisförmige zentrale Durchgangsöffnung 149. Radial innerhalb des Stegs 147 sind Eintrittsöffnungen der Lüftungskanäle 113 zu erkennen. Im Hintergrund sind durch die Lüftungskanäle 113 hindurch Lüfterschaufeln 152 des Lüfters 86 zu erkennen.

Im Vordergrund auf "zwölf"-Uhr-Position sind drei Anschlusslaschen 155 mit Kabelhülsen 156 dargestellt. Diese Anschlusslaschen 155 dienen dazu, die drei Ständerwicklungen 98 zu kontaktieren, siehe auch Figur 3. In diesem Beispiel kann als spezielle Form eines Wechselstroms Drehstrom entnommen werden. Im Unterschied zur Darstellung in Figur 1 kann mittels der Anschlusslaschen 155 der Strom der drei Ständerwicklungen 98 zu einer sogenannten "Wegbau"-Elektronik (beispielsweise ein Passivgleichrichter oder ein Aktivgleichrichter) geführt werden, die nicht auf der Kühlplatte 127 angeordnet ist.

Die einzelnen Lüftungskanäle 113 sind durch radiale Stege 158 getrennt. Diese vom Innenjoch 107 ausgehende Stege 158 wirken als Kühlrippen, kühlen den Ständer 13 und erstrecken sich vom Innenjoch 107 nach radial innen. Diese Stege 158 bzw. Kühlrippen sind einstückig an das Innenjoch 107 angeformt. Die in Figur 2 unmittelbar erkennbaren Stege 158 sind im übrigen Stege 158, die in den Flansch 49 eingearbeitet sind. Die gleiche Anordnung von Stegen 158 und Lüftungskanälen 113 ist auch in den Halbringen 94 und 96 verwirklicht. Während der Flansch 49 von radial außen betrachtet nach den Stegen 158 in einen rohrförmigen Abschnitt 160 der Hülse 52 übergeht, gehen die Stege 158 der Halbringe 94 und 96 in einen dünnen Ringbereich 162 über. Die in Umfangsrichtung beabstandeten Stege 158 bzw. Kühlrippen sind radial innen durch den Ringbereich 162 miteinander einstückig verbunden. In axialer Richtung sind mehrere Ringbereiche 162 und mehrere Halbringe 94, 96 miteinander verspannt.

In Figur 3 sind die bereits erwähnten Lüftungsöffnungen 90 am Außenumfang des Gehäusemantels 34 erkennbar. Des Weiteren ist innerhalb der Lüftungsöffnungen 90 stellvertretend für den ganzen Lüfter 89 eine Lüfterschaufel 164 des Lüfters 89 erkennbar.

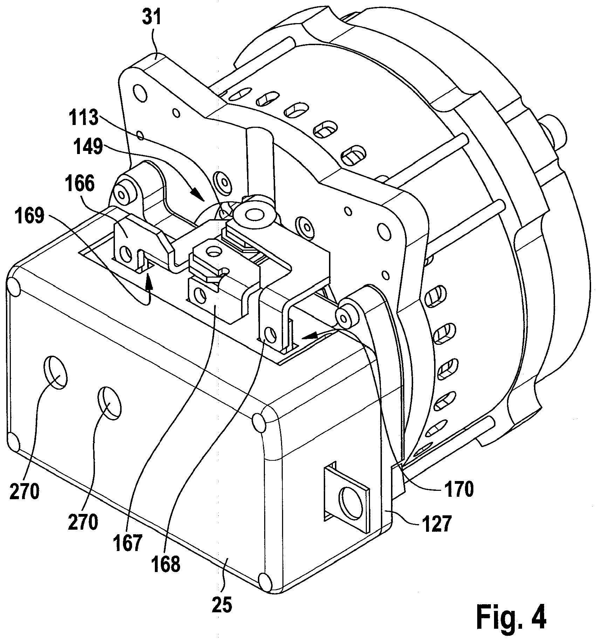

Figur 4 zeigt ausgehend von Figur 1 die technische Lösung mit Anbauelektronik. So wird der von den Ausgängen 108, 109, 110 gelieferte Strom über drei Leiterschienen 166, 167 und 168 zu den Anschlüssen 169, 170 geleitet. Ein dritter Anschluss ist zwar vorhanden, in Figur 4 jedoch nicht dargestellt, weil durch die Leiterschiene 167 verdeckt. Aus der Abdeckhaube 25 ist ein positiver Anschluss 173 beispielsweise zur Versorgung eines Bordnetzes eines nicht dargestellten Kraftfahrzeuges gezeigt.

An den Ausgängen 108, 109, 110 können zusätzlich auch die Anschlusslaschen 155 befestigt sein.

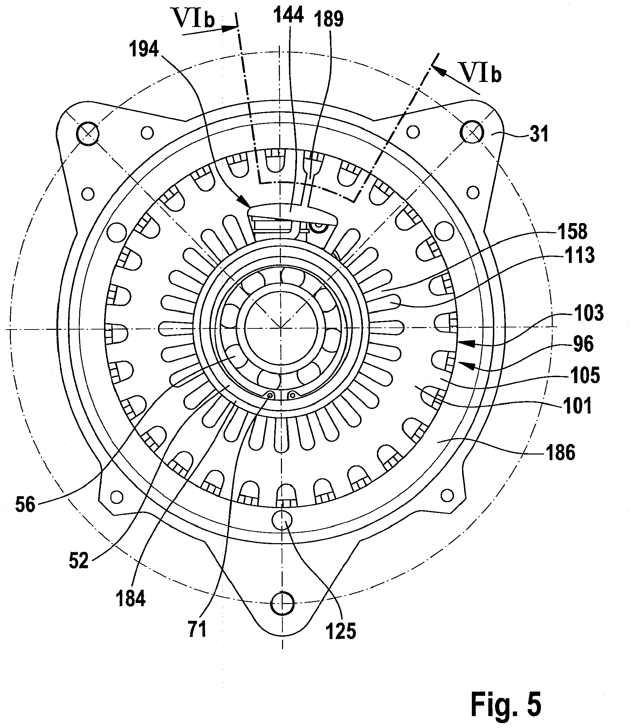

Figur 5 zeigt eine Rückansicht der elektrischen Maschine auf den Flansch 31 bei de- bzw. nicht-montierter Elektronik 28 und auch ohne den Gehäusemantel 34 und ohne montierte Welle 22. Gut zu erkennen ist, dass die Stege 158 einstückig an den Halbring 96 angeformt sind. Gleiches gilt auch für den anderen Halbring 94. Dieses einstückige Anformen dieser Struktur aus Stegen 158 und Lüftungskanälen 113 mit dem Ringbereich 162 ist dann technisch weniger aufwändig wenn das Material, aus dem die Halbringe 94 und 96 gefertigt sind ein sogenannter ferromagnetischer Pulververbundwerkstoff (SMC, d. h. "soft magnetic composite") ist. Angesichts dessen, dass dieses Material gegenwärtig kostenintensiv ist, können die Strukturen aus Stegen 158 und Lüftungskanälen 113 noch weniger aufwändig hergestellt werden, worauf weiter unten eingegangen wird.

Wie bereits Figur 1 entnommen werden kann, sind die Halbringe 94 und 96 mit den Ständerwicklungen 98 bis zum Anschlag an den Flansch 49 auf die Hülse 52 aufgeschoben. Die Halbringe 94 und 96 werden dabei durch einen Absatz 176 (Figur 6A) zentriert. Durch zweierlei Formschlusselemente in Gestalt von Noppen 179 und korrespondierenden Vertiefungen 180 sind die Halbringe 94 und 96 gegenseitig zueinander zentriert. Mittels eines Druck- und Zentrierrings 182 wird einerseits erreicht, dass ein Verbund aus den Halbringen 94 und 96 um die Hülse 52 zentriert und eine Druckkraft - erzeugt durch eine angezogene Wellenmutter 184 - ohne oder nahezu ohne Querkraft auf das SMC-Material aufgebracht wird. Eine entsprechende Querkraft würde dann auf das SMC-Material übertragen werden, wenn die Wellenmutter 184 die durch ihr Anziehen erzeugte Reibungskraft zwischen sich und einem zu verspannenden Körper direkt auf das SMC-Material übertrüge.

Das Wälzlager 56 ist in die Hülse eingesetzt und durch den Innensicherungsring 71 gesichert. Der Flansch 31 hat auf seiner zu dem Ständer 13 gerichteten Seite im äußeren Randbereich einen Absatz 186. Dieser Absatz 186 dient dazu, einen Gehäusemantel 34 zu zentrieren (Figuren 5 und 6A).

Der Halbring 96 weist an seiner zum Betrachter gerichteten Seite, d. h. auf der vom Flansch 31 wegweisenden Seite eine Nut 189 auf. Diese Nut dient dazu, die Vergussmasse 144 zwischen beiden radialen Seiten der Halbringe 94 und 96 fließen lassen zu können. In Figur 6B ist eine Einzelheit, hier ein Schnitt durch zwei Halbringe 94 und 96 gezeigt. Wie dort zu erkennen ist, weisen beide Halbringe 94 und 96 eine Aussparung 190 bzw. 191 auf, deren Profile nach radial innen verlaufen, rechteckig sind und sich zu einem insgesamt rechteckigen Gesamtprofil ergänzen. In diesen Aussparungen 190 und 191 verlaufen spezielle Anschlussteile der Ständerwicklung 98. Wegen der entsprechenden Ähnlichkeit, weisen alle Halbringe 94 und 96 eine Aussparung 190 bzw. 191 auf.

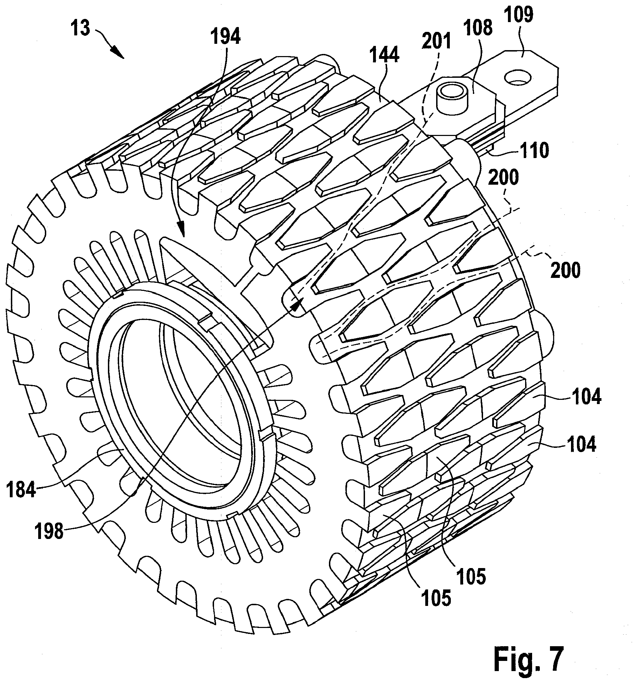

Figur 7 zeigt eine räumliche Ansicht des Ständers 13. Wie bereits in Figur 5 erkennbar ist, haben die Halbringe 94 und 96 eine weitere Aussparung 194, an der sich keine Stege 158 befinden. Im Bereich bzw. in dieser Aussparung 194 sind die Ausgänge 108, 109 und 110 axial geführt, siehe auch Figur 1 und Figur 6A.

Die Klauenpole 104 und 105 eines jeden Ringsystems 92 greifen wechselweise in Klauenpollücken 196 bzw. Klauenpollücken 198 zwischen den jeweils anderen Klauenpolen ein. Die Klauenpollücken 196 sind zwischen Klauenpolen 104, die Klauenpollücken 198 sind zwischen den Klauenpolen 105. Wie in Figur 7 erkennbar ist liegt ein Klauenpol 104 eines Ringsystems 92 an einem Klauenpol 105 eines anderen Ringsystems 92 an. Die Klauenpole 104 und 105 der drei Ringsysteme 92 sind dabei derartig angeordnet, dass sich zwischen den Klauenpolen 104 und 105 wellenförmige Pfade 200 und schraubenförmige Pfade 201 ergeben. Diese Pfade 200 und 201 dienen dazu, Kühlluft durchzulassen.

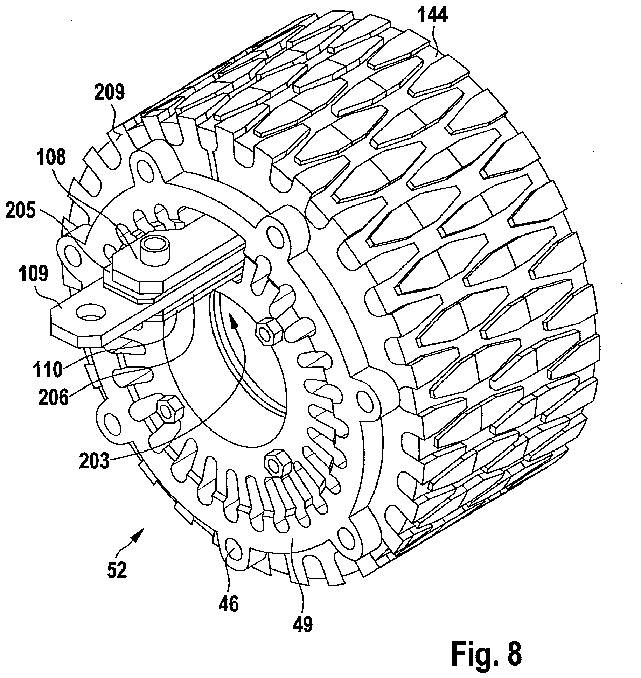

In Figur 8 ist eine weitere räumliche Ansicht des Ständers 13 gezeigt. Durch eine Öffnung 203 im Flansch 49 der Hülse 52 erstrecken sich die drei Anschlüsse 108, 109, 110 der drei Ständerwicklungen 98. Zwischen den drei Anschlüssen 108, 109, 110, d. h. zwischen dem Anschluss 108 und 109 sowie zwischen dem Anschluss 109 und 110 befindet sich jeweils eine Isolationsschicht 205 bzw. 206, die beispielsweise aus einer Polyamidfolie hergestellt ist. Wie diesbezüglich auch aus Figur 1 hervorgeht, sind funktionale Abschnitte der Anschlüsse 108, 109, 110 unterschiedlich lang: Gemessen ab der ersten, zum Flansch 31 gerichteten Stirnfläche 209, sind die zu den Ständerwicklungen 98 gerichteten Teile bzw. Abschnitte der Anschlüsse 108, 109, 110 in etwa im Verhältnis 1:2:3. D. h., dass der entsprechende Abschnitt des Anschlusses 108 zum entsprechenden Abschnitt des Anschlusses 110 nur in etwa ein Drittel so lang ist. Dagegen sind die zur Elektronik 28 gerichteten Abschnitte der Anschlüsse 108, 109, 110 aus Platzgründen in einem anderen Verhältnis. So sind die Längen der Abschnitte der Anschlüsse 108, 109, 110 ab der in Figur 6A dargestellten Stirnfläche 211 in etwa wie 3:5:3. D. h. dass der Abschnitt des mittleren Anschlusses 109 über die beiden anderen Abschnitte der beiden anderen Anschlüsse 108 und 110 hinausragt.

Die Isolationsschicht 205 erstreckt sich zumindest von der äußersten vom Ständer 13 wegweisenden Stirnfläche 213 des Anschlusses 108 bis mindestens zur äußersten von der Stirnfläche 213 des Anschlusses 108 wegweisenden Stirnfläche 215 des Anschlusses 109.
Allgemeiner gesprochen erstreckt sich die Isolationsschicht 205 zwischen zwei direkt benachbarten Anschlüssen 108 und 109 mindestens über die Länge, die zwischen zwei von einander wegweisenden Stirnflächen 213 und 215 liegt.

Die Isolationsschicht 206 erstreckt sich zumindest von der äußersten vom Ständer 13 wegweisenden Stirnfläche 218 des Anschlusses 110 bis mindestens zur äußersten von der Stirnfläche 218 des Anschlusses 110 wegweisenden Stirnfläche 220 des Anschlusses 110.

Allgemeiner gesprochen, erstreckt sich die Isolationsschicht 206 auf oder an dem Anschluss 110, der die Ständerwicklung 98 kontaktiert, welche am weitesten von der Stirnfläche 209 des Ringsystems 92 entfernt ist, welches einer Anschlussseite 217 des Ständers 13 am nächsten gelegen ist, über mindestens die ganze axiale Länge des Anschlusses 110.

Die drei bzw. die Anschlüsse 108, 109, 110 sind auf der von den Ständerwicklungen 98 wegweisenden Seite an einer sich insgesamt bzgl. der Anschlüsse 108, 109 und 110 überlagernden Stelle 222 mit einem durchgehenden Loch 224 versehen. Die Isolationsschichten 205 und 206 sind an dieser Stelle 222 ebenfalls gelocht. In die fünf Löcher ist eine Hülse 225 aus einem Isolierstoff gesteckt. Diese Hülse 225 steht beidseitig über den Verband aus Anschlüssen 108, 109, 110 und Isolationsschichten 205 und 206 über, s. u. a. Figur 6A und Figur 8. Auf der Oberseite dieses Verbands, d. h. auf dem Anschluss 108 sitzt die durch die Hülse 225 zentrierte Leiterschiene 168 auf; auf der Unterseite dieses Verbands, d. h. auf dem Anschluss 110 sitzt die durch die Hülse 225 zentrierte Leiterschiene 166 auf, Figur 1 und Figur 4. Zwei darauf aufliegende Isolierscheiben 227 bilden Unterlagen bzw. Auflagen für ein Befestigungsmittel wie beispielsweise einer Schraube und einer Schraubenmutter, die hier nicht dargestellt sind und den Verband kontaktsicher pressen.

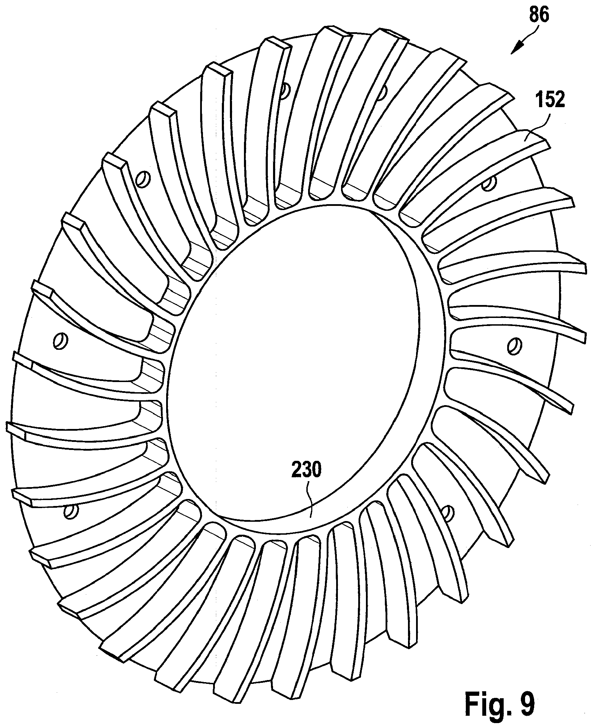

In Figur 9 ist der in Figur 1 dargestellte Lüfter 86 als Einzelteil in einer räumlichen Ansicht dargestellt. Dieser Lüfter 86 ist an der Innenseite des Gehäusebodens 80 des Außenläufers 16 mittels einiger Befestigungselemente befestigt. Der Lüfter 86 weist eine zentrale Öffnung 230 auf, deren Durchmesser größer als ein Außendurchmesser der Wellenmutter 184 ist, Figur 1.

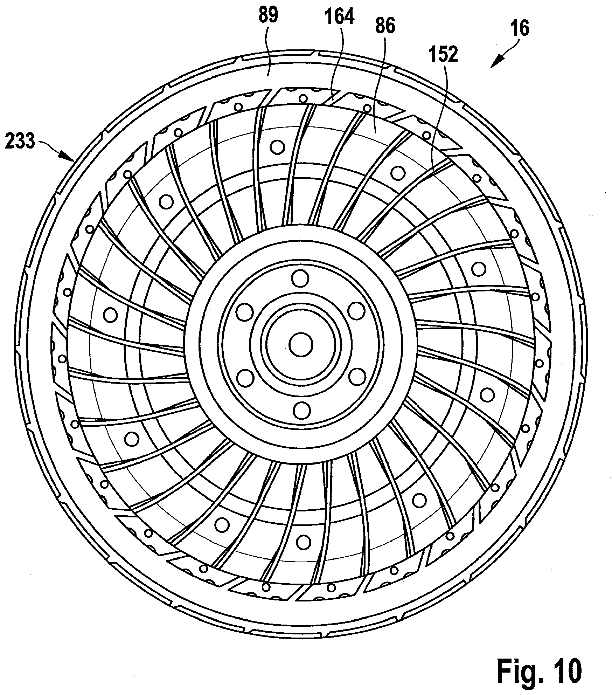

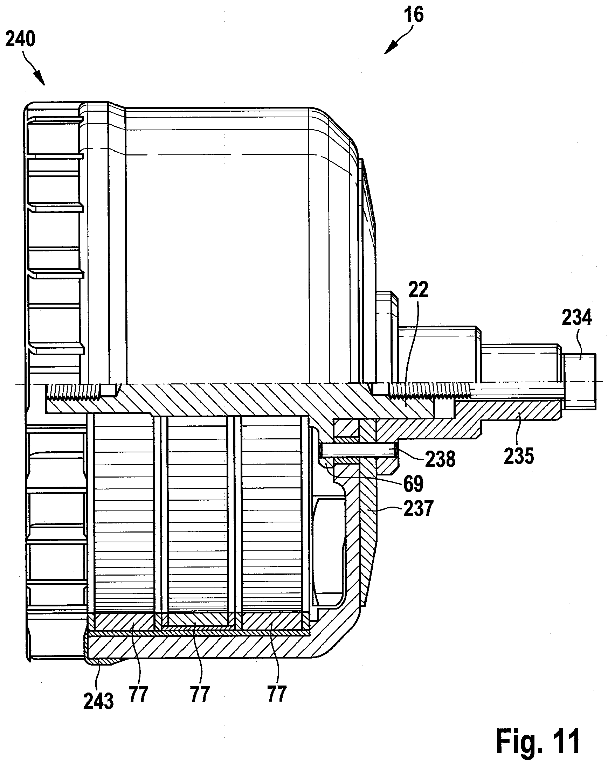

Figur 10 zeigt eine Ansicht des Außenläufers 16 in seinen Hohlraum. Gut sind die Lüfterschaufeln 152 des Lüfters 86 zu erkennen sowie innere Enden der Lüfterschaufeln 164 des Lüfters 89, die durch einen Stabilisierungsring 233 gegen Verbiegen nach radial außen gesichert sind. Der Außenläufer 16 ist, siehe auch Figur 11, aus verschiedenen Bauteilen aufgebaut: An den Bund 69 der Welle 22 ist der Gehäuseboden 80 angedrückt. Dabei presst eine in ein Wellenende eingeschraubte Schraube 234 eine Hülse 235 gegen eine stabilisierende Platte 237, diese wiederum überträgt die Druckkraft auf den Gehäuseboden 80. Damit die Welle 22, die Platte 237 und der Gehäuseboden 80 zueinander lagerichtig montiert werden können, sind Passstifte 238 in Bohrungen im Bund 69 eingesetzt. Auf diese Passstifte 238 sind der Gehäuseboden 80, die Platte 237 und die Hülse 235 aufgesetzt.

Auf der im Wesentlichen zylindrischen Innenseite sind die Permanentmagnete 77 befestigt. An dem dem Gehäuseboden 80 abgewandten Ende 240 des zylindermantelförmigen Abschnitts 73 ist der beispielsweise aus Kunststoff hergestellte Lüfter 89 mittels einer Schnappverbindung aufgesteckt. Hierzu umgreift ein am Lüfter 89 angeformter Ringabschnitt 243 die zylindrische Außenseite des zylindermantelförmigen Abschnitts 73.

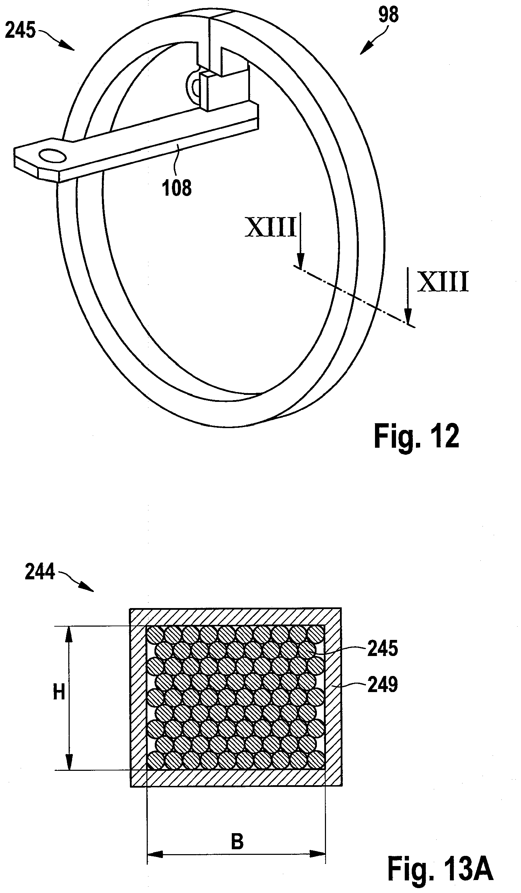

Figur 12 zeigt eine räumliche Ansicht einer Ständerwicklung 98, hier der Ständerwicklung 98, die der Anschlussseite 217 nächstgelegen ist. Die Ständerwicklung 98 besteht aus gerade einer Windung 245. Allerdings ist die Ständerwicklung 98 in diesem Fall als Litze 244 ausgeführt, wobei die Litze 244 eine Mehrzahl an einzelnen Drähten 245 aufweist, Figur 13A. Gemäß einer speziellen Auslegung ist vorgesehen, dass die Litze 244 1000 Drähte mit einem Durchmesser von jeweils 0,2mm aufweist. Alle einzelnen Drähte 245 der Litze 244 sind somit einmal gewunden (etwas weniger als 360°, d. h. nicht ganz 360°). Die einzelnen Drähte 245, d. h. jeder einzelne Drahtquerschnitt bspw. aus Kupfer, der Litze 244 sind zudem gegeneinander bspw. durch eine Lackschicht als Isolierschicht 247 isoliert. Daran anschließend wird die Litze 244 an ihrem Außenumfang zusätzlich isoliert, wobei dies hier beispielsweise durch eine Bandage 249 erfolgt. Die Litze 244 wird zunächst in gerader Form vorbereitet. Die einzelnen Drähte 245 der Litze 244 liegen dann alle geradlinig nebeneinander. Würde man eine solche geradlinige bandagierte Litze 244 anschließend winden wollen, würde dies über den Querschnitt der Litze 244 zu erheblichen ungleichmäßigen Längenänderungen und inneren Spannungen (zwischen den einzelnen Drähten) führen. Alternativ können die einzelnen Drähte 245 der Litze 244 auch ohne Isolierung 247 ausgeführt sein. Dem möglichen Vorteil höheren Kupferquerschnitts steht dann der mögliche Nachteil höherer Stromverdrängung gegenüber. Die Litze 244 hat im hier beschriebenen Ausführungsbeispiel eine Stromverdrängung von 1,14 bei 10000 Umdrehungen pro Minute.

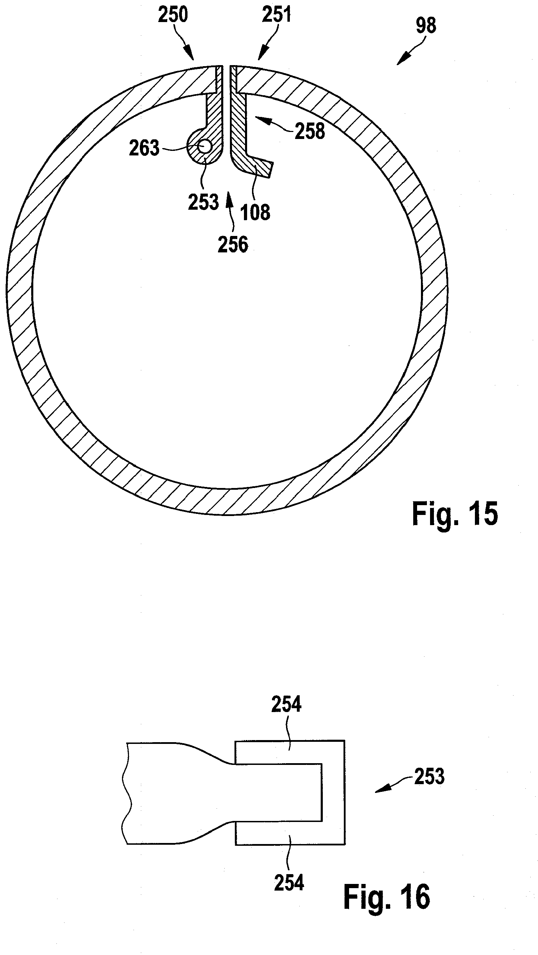

Nach diesem Schritt wird die Litze 244 im Bereich eines vorzusehenden Stoßes (dort stehen sich die beiden Enden der Litze 244 gegenüber) umfänglich komprimiert und die Litze 244 mit zwei geraden Stirnflächen versehen. In deren Bereich wird die Isolierschicht 247 entfernt und die Drähte miteinander durch ein Lot miteinander verbunden. Die Ständerwicklung 98 weist nun eine offene Kreisringform von nahezu 360° auf, wobei die Ständerwicklung 98 zwei einander gegenüberstehende Enden 250, 251 hat, wobei das Ende 251 mit einem Anschlussteil 108 und das Ende 250 mit einem Anschlussteil 253 (Ösenanschluss) stoffschlüssig miteinander verbunden sind. Dabei wird ein Ende 250, 251 so mit einem Anschlussteil 108, 253 verbunden, dass ein Bord 254 eines Anschlussteils 108, 253 das Ende einfasst, Figur 16. Das Anschlussteil 108, 253 wird dabei noch während ein Lot zur stoffschlüssigen Verbindung flüssig ist an das Ende 250, 251 gepresst. Zwischen das Anschlussteil 108 und das Anschlussteil 253 (Ösenanschluss) ist des Weiteren ein Isolierstoff 256, beispielsweise ein Isolierplättchen eingebracht, damit zwischen dem Anschlussteil 108 und dem Ösenanschluss 253 kein Kurzschluss entsteht. Anschließend wird die Ständerwicklung 98 bandagiert. Vorzugsweise wird dabei auch ein Halsabschnitt 258 bandagiert. Dieser Halsabschnitt 258 umfasst sowohl von dem Anschlussteil 108 und dem Anschlussteil 253 (Ösenanschluss) jeweils einen nach radial innen ragenden Abschnitt. Dieser Halsabschnitt 258 ragt in der montierten Maschine in die Aussparungen 190 und 191, siehe auch Figur 6B.

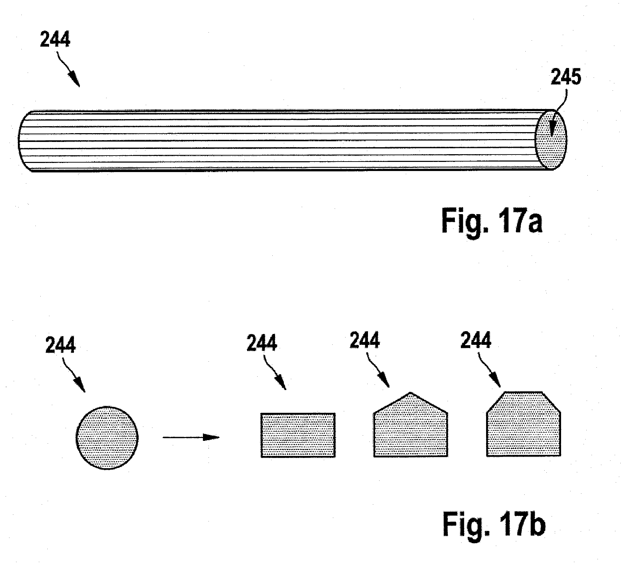

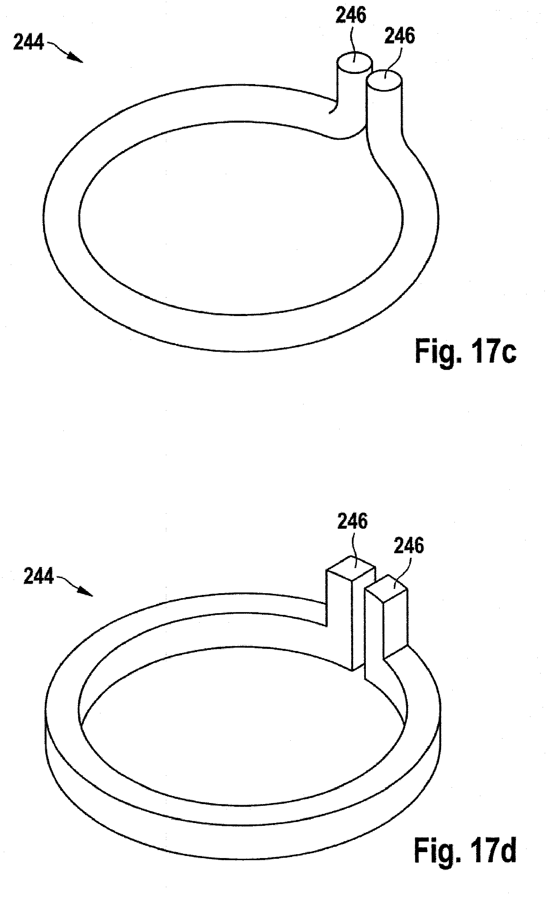

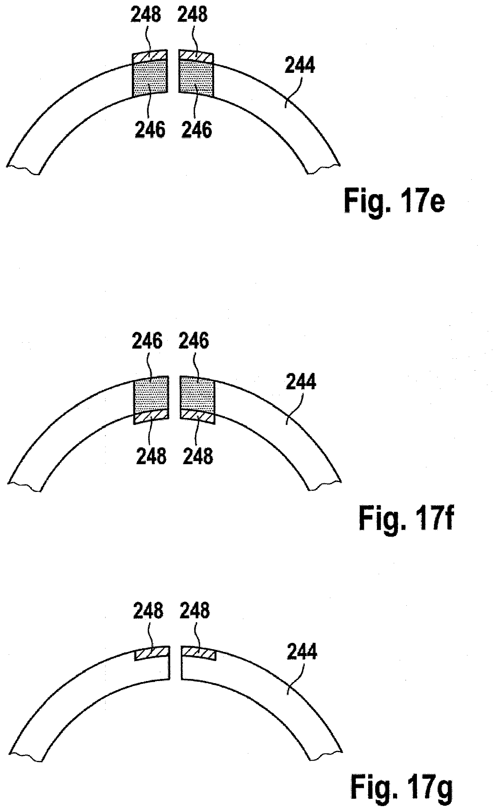

Im Rahmen des Herstellungsverfahrens sind mehrere Verfahrensschritte vorgesehen. Zunächst wird eine Litze 244 bereitgestellt, Figur 17a). In einem weiteren Schritt wird die Litze 244 kompaktiert, d. h. die Litze 244 erhält näherungsweise einen Querschnitt, der der Ständerwicklung 98 entspricht, Figur 17b). Beispielhaft sind in Figur 17b) drei verschiedene Formquerschnitte nach dem Kompaktieren bzw. Prägen der Litze 244 dargestellt. Während dieses Verfahrensschrittes ist eine Bündelung der Litze 244 sinnvoll (evtl. bereits durch eine ggf. einzige Bandagierung), um eine Verlagerung der Drähte zu vermeiden, ganz besonders beim nachfolgenden Windungsschritt. In Figur 17c) folgende sind weitere Ausführungen der Litze 244 gezeigt, bei der nicht nur der eigentliche Windungsabschnitt geprägt ist, sondern auch beide Enden 246, die sich zudem in axialer Richtung erstrecken. Während in Figur 17c) eine Litze 244 mit rundem Querschnitt gezeigt ist, weist die Litze in Figur 17d) einen rechteckigen Querschnitt auf. In Figur 17e) ist eine rechteckig geprägte Litze 244 bzw. Ständerwicklung 98 dargestellt, wobei auf eine radiale Außenseite bzw. die beiden Enden 246 der Litze 244 zwei Bleche 248 als Anschlüsse aufgelötet oder aufgeschweißt sind. In Figur 17f) ist eine rechteckig geprägte Litze 244 bzw. Ständerwicklung 98 dargestellt, wobei auf eine radiale Innenseite bzw. die beiden Enden 246 der Litze 244 zwei Bleche 248 als Anschlüsse aufgelötet oder aufgeschweißt sind. In Figur 17g) ist eine rechteckig geprägte Litze 244 bzw. Ständerwicklung 98 dargestellt, wobei auf eine radiale Außenseite bzw. die beiden Enden 246 der Litze 244 zwei Bleche 248 als Anschlüsse aufgelötet oder aufgeschweißt sind. Die Litze 244 ist dabei zuvor so geprägt worden, dass in den ringförmigen Querschnitt der Ständerwicklung 98 eine Aussparung geprägt ist, in die die Bleche 248 eingepasst sind.

Mit Bezug zu Figur 13A weist im Ausführungsbeispiel eine Ständerwicklung 98 einen unbandagierten Querschnitt A1 mit einer radialen Höhe H in Richtung zu einer Drehachse des Außenläufers 16 und einer axialen Breite B in Richtung der Drehachse des Außenläufers 16 auf. Im Beispiel ist B ca. 10mm und H ca. 7mm groß. Der unbandagierte Querschnitt beträgt demnach in etwa 70mm². Ein einzelner Draht der Litze 244 weist einen Querschnitt A2 von 0,1² * Π mm² und demnach ca. 0,0314mm² auf. Ein Verhältnis A1/A2 ist in diesem Fall ca. 2228. Im Rahmen der Auslegung der Ständerwicklung 98 ist vorgesehen, dass das Verhältnis in erster Näherung kleiner als 2500, in weiterer Näherung kleiner als 2000 oder kleiner als 1500 ist.

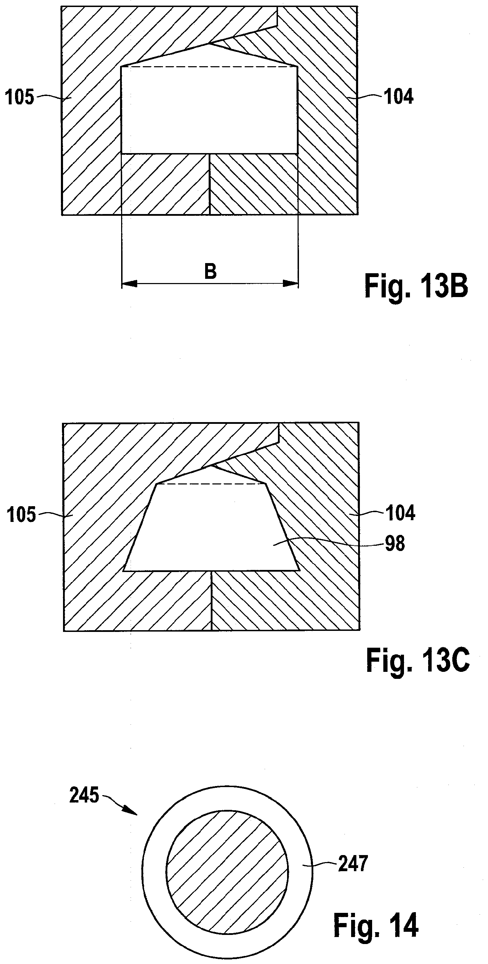

Als weiteres Verhältnis lässt sich ein Quotient aus dem Querschnitt A1 und einem Umfang U eines Einzeldrahtes der Litze 244 ermitteln. Aus dem Beispiel ergibt sich ein Quotient A1/U von ca. 111mm, wobei U gleich dem Produkt aus Π * 0,2 mm. In erster Näherung ist erwünscht, dass das Verhältnis A1/U größer 40, in zweiter Näherung größer 80, vorzugsweise größer 120 ist. In Figur 13B ist eine alternative Querschnittsform für die Ständerwicklung 98 dargestellt. Diese Querschnittsform ist eine Summenfläche ("Haus mit Satteldach"-Form) aus einem Rechteck wie in Figur 13A und einem aufgesetzten Dreieck. Das Dreieck stellt gegenüber der Querschnittsform in Figur 13A einen Zugewinn dar, der durch optimierte Anpassung des Aufnahmeraums radial unterhalb der Klauenpole 104 und 105 entsteht. In Figur 13C ist als weitere Querschnittsform der Ständerwicklung 98 als Grundform ein Trapez vorgesehen, wobei die schrägen Flächen im Wesentlichen in axialer Richtung orientiert sind. Zusätzlich kann die Trapezform summarisch durch eine dreieckige Querschnittsfläche unterhalb der Klauenpole 104 und 105 ergänzt sein.

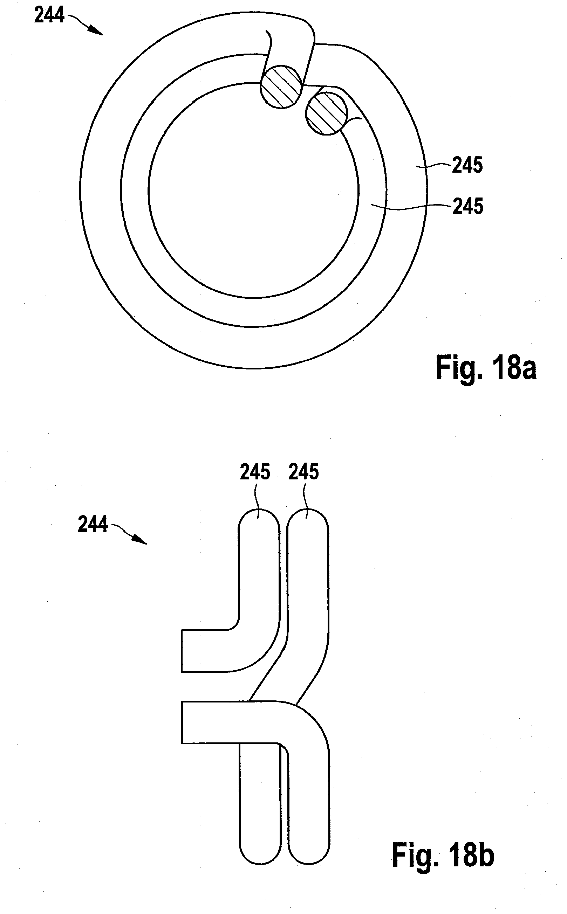

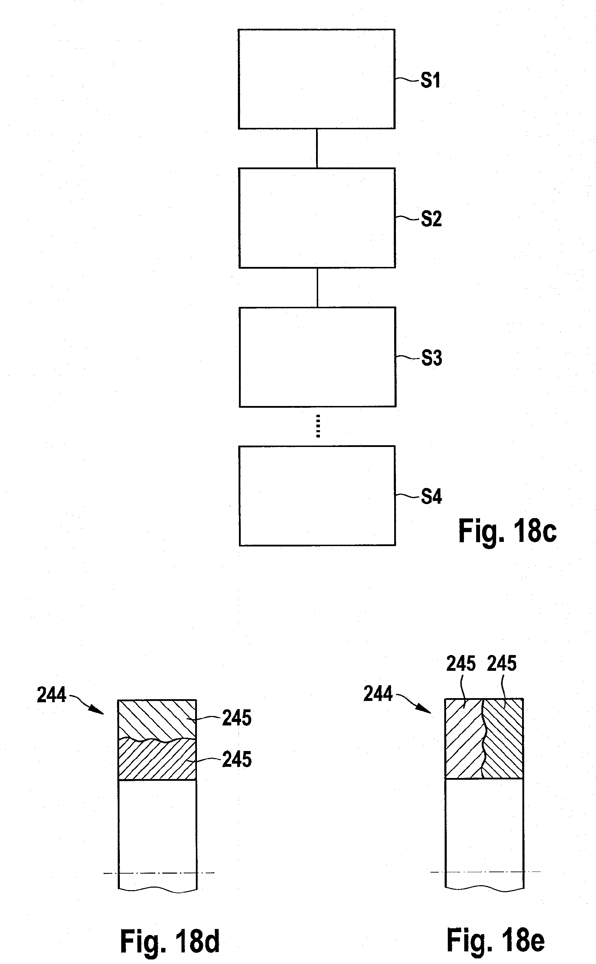

Ein weiteres Ausführungsbeispiel einer Ständerwicklung 98 ist in Figur 18a) gezeigt. Diese Ständerwicklung 98 ist im Unterschied zur zuvor beschriebenen Variante eine Ständerwicklung 98 aus Litze 244 mit mehr als nur einer Windung 245. Dies hat den Vorteil, dass die Stromverdrängung weiter reduziert wird. Des Weiteren besteht eine größere Flexibilität hinsichtlich der Leiterzahlanpassung bei der Ständerwicklung 98. Zu dem kann das sogenannte Wickelfenster optimal ausgenutzt werden. Wie bereits zu Figur 17a) beschrieben, wird zunächst ein Strang aus Litze 244, bestehend aus einer Vielzahl von isolierten einzelnen Drähten 245 (Figur 14) zur Verfügung gestellt. Dieser Strang wird danach isoliert, beispielsweise durch eine Bandage 249, Figur 13A. Der Strang wird vor oder nach dem Isolieren in mehreren Windungen 245 angeordnet, siehe auch Figur 18a) und Figur 18b) (Formen in Ringform, weiteres Ausführungsbeispiel). In Figur 18a) sind die Windungen 245 radial, in Figur 18b) axial aufeinander gewickelt bzw. geschichtet. In Figur 18c) sind einzelne Schritte schematisch dargestellt. Gemäß Schritt S1 wird die isolierte Litze 244 zunächst gepresst, um die Litze 244 abzuflachen (axiale Richtung), vorzugsweise wird ein Innendurchmesser der Ständerwicklung 98 bzw. der Litze 244 bereits voreingestellt. Anschließend wird die abgeflachte Litze 244 geformt, Schritt S2, ggf. wird nicht nur ein Außendurchmesser sondern auch der Innendurchmesser eingestellt bzw. geformt. Anschließend wird die Ständerwicklung 98 bzw. die Litze 244 geprägt, so dass auch die Breite B eingestellt ist, Schritt S3. Ggf. wird danach in einem weiteren Schritt S4 ein fester Verband erzeugt, d. h. die Ständerwicklung 98 bzw. die Litze 244 wird mit einem vorzugsweise thermisch aushärtbaren Harz (Backlack) beschichtet oder getränkt, in einer Form ggf. erhitzt und dadurch eine feste Ständerwicklung 98 erzeugt.

In Figur 18d) ist ein möglicher Querschnitt der Ständerwicklung 98 bzw. der Litze 244 gezeigt, wie er durch Wickeln wie in Figur 18a) dargestellt und nach dem Kompaktieren bzw. Prägen entsteht.

In Figur 18e) ist ein möglicher Querschnitt der Ständerwicklung 98 bzw. der Litze 244 gezeigt, wie er durch Wickeln wie in Figur 18b) dargestellt und nach dem Kompaktieren bzw. Prägen entsteht.

Es ist somit eine Ständerwicklung 98 für eine Transversalflussmaschine 10 offenbart, wobei die Ständerwicklung 98 als Litze 244 ausgeführt ist und die Litze 244 eine Mehrzahl an einzelnen Drähten 245 aufweist, wobei die Ständerwicklung 98 als Spule mit mehr als einer Windung 245 ausgeführt ist. Schließlich werden vor oder nach dem Aushärten in einer der beschriebenen Weisen Anschlüsse an die Ständerwicklung 98 angebracht.

Es ist somit ein Verfahren zur Herstellung einer Ständerwicklung 98 aus Litze 244 offenbart, wobei zunächst ein Litzenstrang bereitgestellt wird und in späteren Schritten S1, S2, S3 die Ständerwicklung 98 in eine Ringform geformt, isoliert und ein Querschnitt der Ständerwicklung umgeformt wird. Es ist vorgesehen, dass mehr als nur eine Windung 245 in einer Umfangsrichtung gewunden wird.

Des Weiteren ist vorgesehen, dass die Ständerwicklung 98 mit aushärtbarem Stoff, vorzugsweise Harz bzw. Backlack beschichtet und später dieser Stoff ausgehärtet wird.

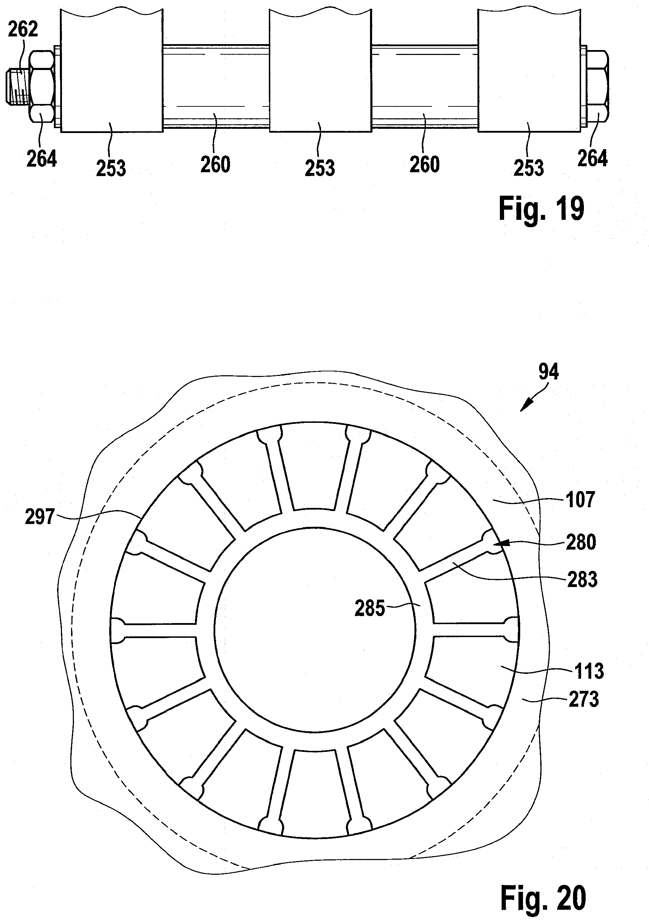

In Figur 19 sind drei Anschlussteile 253 der drei nacheinander angeordneten Ständerwicklungen 98 dargestellt. Es handelt sich hierbei um die Teile, die als Ösenanschluss dienen. Die drei Anschlussteile 253 sind voneinander beabstandet. Zwischen zwei Anschlussteilen 253 befindet sich jeweils eine metallische Buchse 260. Durch die Anschlussteile 253 und die Buchsen 260 ist ein Schraubenbolzen 262 einer Schraube 264 gesteckt. Die Anschlussteile 253 und die Buchsen 260 sind miteinander verspannt, so dass zwischen Anschlussteilen 253 und Buchsen 260 eine elektrische Verbindung vorliegt. Diese Anordnung ist der Sternpunkt der drei Ständerwicklungen 98. Es ist somit eine Transversalflussmaschine offenbart, wobei je einer der Anschlüsse der Ständerwicklungen 98 ein Loch 263 aufweist und diese Anschlüsse bzw. eines der Anschlussteile 253 der Ständerwicklungen 98 axial in Drehrichtung eines Außenläufers 16 hintereinander angeordnet sind, wobei diese Anschlussteile 253 durch einen in den Löchern 263 sitzenden Bolzen (Schraubenbolzen 262) miteinander mechanisch und elektrisch miteinander verbunden sind und dadurch ein Sternpunkt gebildet ist. Vor dem Hintergrund einer Verallgemeinerung: Diese Anordnung - entweder zur Bildung des Sternpunktes oder zur Herausführung der der Anschlüsse 108, 109 und 110 - ist unabhängig von der Wahl der Ausführung der Ständerwicklung 98. Wichtig ist lediglich, dass zur Ausbildung des Sternpunktes ein Ende einer Ständerwicklung 98 mit einem Anschlussteil 253 ausgeführt ist, wobei bevorzugt alle Ständerwicklungen 98 derartig ausgeführt sind. Zur Herausführung der Anschlüsse 108, 109 und 110 bzw. deren Anordnung zueinander ist lediglich vorgesehen, dass ein Ende der Ständerwicklungen 98 mit einem der Anschlüsse 108, 109 und 110 verbunden ist.

Nachfolgend wird die Kühlung der Transversalflussmaschine 10 beschrieben, die in den Figuren 1 und 4 beschrieben ist (mit angebauter Elektronik). Die zu den Figuren 1 und 4 beschriebene Kühlung der Transversalflussmaschine 10 ist nicht Teil der Erfindung. Durch eine Drehung des Außenläufers 16 und damit auch des Lüfters 86 wird in der Maschine ein Unterdruck erzeugt. Dieser Unterdruck führt dazu, dass durch den Lüfter 86 Luft nach radial außen, das heißt zwischen dem Gehäuseboden 80 und dem Halbring 96 des Ringsystems 92, welches dem Gehäuseboden 80 am nächsten gelegen ist, transportiert wird. Diese Kühlluft wird durch den Außenläufer 16 umgelenkt und, wie in Figur 7 gezeigt, zwischen die Klauenpole 104 und 105 und damit in einen Zwischenraum 265 in axialer Richtung gedrückt. Die Kühlluft umströmt alle drei Ringsysteme 92 und wird danach durch den Lüfter 89 nach radial außen durch die Lüftungsöffnungen 90 in die Umgebung gedrückt.

Der vom Lüfter 86 erzeugte Unterdruck führt dazu, dass an dem dem Lüfter 86 direkt gegenüberliegenden Ende des Lüftungskanals 113 ein Unterdruck entsteht und somit Kühlluft durch den Lüftungskanal 113 nachströmt. An dem dem Lüfter 86 abgewandten Ende des bzw. der Lüftungskanäle 113 wird beispielsweise im Bereich der Anschlüsse 108, 109 und 110 durch den Flansch 31 und damit durch die Durchgangsöffnung 149 Kühlluft aus der Umgebung angesaugt, Figur 4. Zudem wird Kühlluft durch Öffnungen 270 in der Abdeckhaube 25 in die Maschine eingesaugt, um zunächst die Elektronik 28 zu kühlen und danach durch in der Figur 1 nicht gezeigte Öffnungen in der Kühlplatte 127 zu der Durchgangsöffnung 149 (Figur 2) und in die Lüftungskanäle 113 zu strömen. Zu dem saugt der Lüfter 89 durch die Langlöcher 142 und die Nut 133 sowie nicht gezeigte Öffnungen in der Kühlplatte 127 zusätzliche Kühlluft zum Kühlen der Elektronik 28 an.

Es ist somit eine Transversalflussmaschine 10 mit einem Ständer 13 und einem Außenläufer 16 offenbart, der um den Ständer 13 herum angeordnet ist, wobei der Ständer 13 zwei axiale einander abgewandte Stirnseiten 273, 276 aufweist, mit einen Innenjoch 107 des Ständers 13, mit einem Kühlpfad, der radial innerhalb des Innenjochs 107 angeordnet ist, wobei der Kühlpfad bei der axialen Stirnseite 273 des Ständers 13 aus der Transversalflussmaschine 10 heraustritt, die der Eintrittseite zugewandt ist, wobei der Kühlpfad zwischen Eintritt und Austritt in einem Zwischenraum zwischen Ständer 13 und Außenläufer 16 verläuft.

In Figur 20 ist ausschnittweise eine Ansicht einer Variante des Ständers 13 gezeigt. Im Gegensatz zur bisherigen Variante sind die Halbringe 94, 96 nach radial innen durch das Innenjoch 107 begrenzt, d. h. die Halbringe 94, 96 weisen keine Stege 158 auf. Stattdessen haben die Halbringe 94, 96 eine zentrale vorzugsweise runde Öffnung 279. In diese Öffnung 279, d. h. an das Innenjoch 107 angrenzend ist ein Kühlrippenelement 280 aus einem weniger kostenintensiven Werkstoff wie beispielsweise einer Aluminiumlegierung eingesetzt, welches mittels Kühlrippen 283 Wärmeabgabe von den Halbringen 94, 96 ermöglicht und die Zentrierung der Halbringe 94, 96 vorzugsweise mittels eines Innenrings 285 auf der Hülse 52 ermöglicht. Das Kühlrippenelement 280 kann beispielsweise ein Strangpressprofil sein.

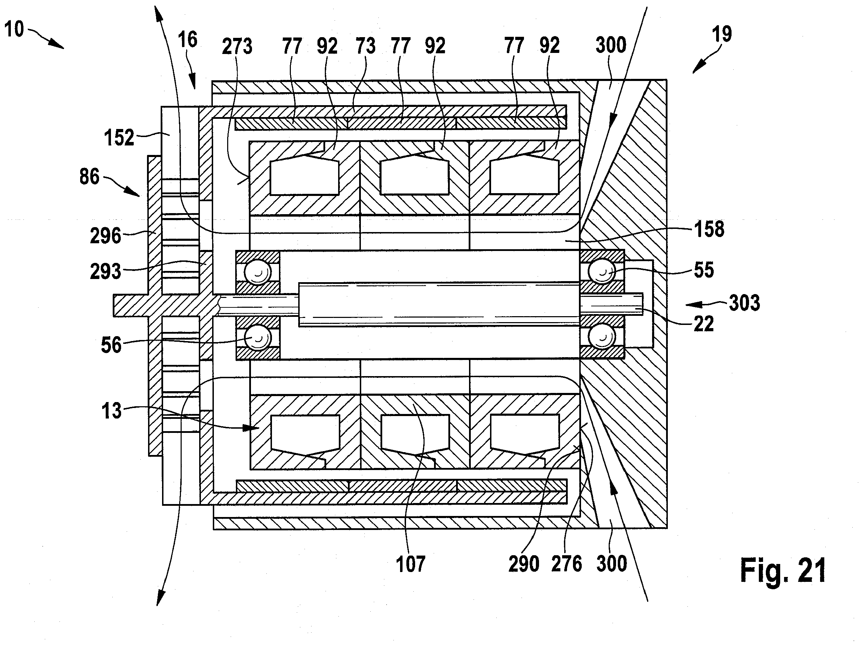

In Figur 21 ist ein weiteres Ausführungsbeispiel einer Transversalflussmaschine 10 skizziert. Gleich funktionierende Bauteile sind im Übrigen mit gleichen Bezugszahlen benannt. So ist an einem Gehäuse 19 ein dreiphasiger Ständer 13 mit drei Ringsystemen 92 an einer Gehäuseinnenwand 290 befestigt. Eine Welle 22 ist sowohl im Gehäuse 19 als auch radial innerhalb des Ständers 13 gelagert, wozu die Wälzlager 55 und 56 dienen. Am von der Gehäuseinnenwand 290 abgewandten Ende der Welle 22 ist eine Tragplatte 293 mitdrehend befestigt. Diese Tragplatte 293 trägt radial und axial außen Lüfterschaufeln 152. Auf der den Lüfterschaufeln 152 gegenüberliegenden Seite der Tragplatte wird ein zylinderringförmiger Abschnitt 73 getragen. Auf dessen zylindrischer Innenseite sind - wie zuvor - ebenfalls in drei Reihen Permanentmagnete 77 befestigt, die die Ringsysteme 92 mit ihrem magnetischen Feld durchfluten. Eine Stirnplatte 296 zwischen Welle 22 und Lüfterschaufeln 152 dient zur Verbesserung des Lüfterwirkungsgrades. Durch Drehung der Welle, beispielsweise durch eine an dem linken Ende der Welle 22 nicht dargestellte Riemenscheibe, bewirkt der Lüfter 86 einen Unterdruck am Außenrand des Lüfters 86. Dadurch entsteht ein Luft- bzw. Kühlluftzug durch die Maschine, der durch die beiden langen Pfeile beim Kühllufteintritt 300 beginnend einbeschrieben ist. Die Kühlluft zieht somit zunächst von einer Eintrittsseite 303 auf einer Seite des Ständers 13 nach radial innen, um dort in die axiale Richtung (Drehachse des Außenläufers 16) umgelenkt zu werden. Danach strömt die Kühlluft an Stegen 158 vorbei in axialer Richtung im Inneren des Ständers 13. Anschließend tritt die Kühlluft auf der der Eintrittseite abgewandten Seite des Ständers 13 wieder aus, um nach radial außen umgelenkt und durch die Lüfterschaufeln 152 aus der Maschine geschleudert zu werden.

Es ist somit eine Transversalflussmaschine mit einem Ständer 13 und einem Außenläufer 16 offenbart, der um den Ständer 13 herum angeordnet ist, wobei der Ständer 13 zwei axiale Stirnseiten 273, 276 aufweist, mit einen Innenjoch 107 des Ständers 13, mit einem Kühlpfad, der radial innerhalb des Innenjochs 107 angeordnet ist, wobei der Kühlpfad auf der axialen Stirnseite 273 des Ständers 13 aus der Transversalflussmaschine 10 heraustritt, die einer Eintrittseite 303 abgewandt ist.

## Patentansprüche

1. Transversalflussmaschine mit einem Ständer (13) und einem Außenläufer (16), der um den Ständer (13) herum angeordnet ist, wobei der Ständer (13) zwei axiale Stirnseiten (273, 276) aufweist, mit einen Innenjoch (107) des Ständers (13), mit einem Kühlpfad, der radial innerhalb des Innenjochs (107) angeordnet ist, **dadurch gekennzeichnet, dass** ein Kühlpfad auf der axialen Stirnseite (273) des Ständers (13) aus der Transversalflussmaschine (10) heraustritt, die einer Eintrittseite (303) abgewandt ist.

2. Transversalflussmaschine nach Anspruch 1, **dadurch gekennzeichnet, dass** vom Innenjoch (107) ausgehende Stege (158) sich nach radial innen erstrecken.

3. Transversalflussmaschine nach Anspruch 2, **dadurch gekennzeichnet, dass** die Stege (158) einstückig an das Innenjoch (107) angeformt sind.

4. Transversalflussmaschine nach Anspruch 3, **dadurch gekennzeichnet, dass** in Umfangsrichtung beabstandete Stege (158) radial innen durch einen Ringbereich (162) miteinander einstückig verbunden sind und in axialer Richtung mehrere Ringbereiche (162) miteinander verspannt sind.

5. Transversalflussmaschine nach Anspruch 1, **dadurch gekennzeichnet, dass** im Innenjoch (107) ein Kühlrippenelement (280) eingesetzt ist.

6. Transversalflussmaschine nach Anspruch 5, **dadurch gekennzeichnet, dass** das Kühlrippenelement (280) Halbringe (94, 96) des Ständers (13) auf einer Hülse (52) zentriert.

7. Transversalflussmaschine nach Anspruch 6, **dadurch gekennzeichnet, dass** die Halbringe (94, 96) nach radial innen durch das Innenjoch (107) begrenzt sind, wobei in das Innenjoch (107) ein Kühlrippenelement (280) eingesetzt ist, welches mittels Kühlrippen (283) Wärmeabgabe von den Halbringen (94, 96) ermöglicht und die Halbringe (94, 96) auf einer Hülse (52) ermöglicht.

## Claims

1. A transversal flux machine comprising a stator (13) and an external rotor (16) arranged around the stator (13), the stator (13) having two axial end faces (273, 276), with an inner yoke (107) of the stator (13), with a cooling path, which is arranged radially inside of the inner yoke (107), **characterised in that** a cooling path of the stator (13) emerges from the transversal flux machine (10), on the axial end face (273), which faces away from an inlet side (303).

2. The transversal flux machine according to claim 1, **characterised in that** webs extending (158) from the inner yoke (107) extend radially inward.

3. The transversal flux machine according to claim 2, **characterised in that** the webs (158) are integrally formed on the inner yoke (107).

4. The transversal flux machine according to claim 3, **characterised in that** webs (158) spaced in the circumferential direction are integrally connected to each other radially inwardly by a ring portion (162), and a plurality of ring portions (162) are clamped together in the axial direction.

5. The transversal flux machine according to claim 1, **characterised in that** a cooling fin element (280) is inserted in the inner yoke (107).

6. The transversal flux machine according to claim 5, **characterised in that** the cooling fin element (280) centres half rings (94, 96) of the stator (13) on a sleeve (52).

7. The transversal flux machine according to claim 6, **characterized in that** the half rings (94, 96) are bounded radially inwardly by the inner yoke (107), wherein a cooling fin element (280) is inserted in the inner yoke (107), which allows heat release from the half-rings (94, 96) by means of cooling fins (283) and allows the half-rings (94, 96) on a sleeve (52).

## Revendications

1. Machine à flux transversal comportant un stator (13) et un rotor extérieur (16) agencé autour du stator (13), dans laquelle le stator (13) comporte deux faces frontales axiales (273, 276), avec une culasse intérieure (107) du stator (13), un trajet de refroidissement agencé radialement à l'intérieur de la culasse intérieure (107), **caractérisée en ce qu'**un trajet de refroidissement sort de la machine à flux transversal (10) sur la face frontale axiale (273) du stator (13) qui est opposée à un côté d'entrée (303).

2. Machine à flux transversal selon la revendication 1, **caractérisée en ce que** des nervures (158) sortant de la culasse intérieure (107) s'étendent radialement vers l'intérieur.

3. Machine à flux transversal selon la revendication 2, **caractérisée en ce que** les nervures (158) sont formées d'un seul tenant sur la culasse intérieure (107).

4. Machine à flux transversal selon la revendication 3, **caractérisée en ce que** des nervures (158) espacées dans une direction circonférentielle sont reliées d'un seul tenant les unes aux autres radialement à l'intérieur par une zone annulaire (162) et plusieurs zones annulaires (162) sont serrées les unes avec les autres dans une direction axiale.

5. Machine à flux transversal selon la revendication 1, **caractérisée en ce qu'**un élément d'ailette de refroidissement (280) est inséré dans la culasse intérieure (107).

6. Machine à flux transversal selon la revendication 5, **caractérisée en ce que** l'élément d'ailette de refroidissement (280) centre des demies bagues (94, 96) du stator (13) sur une douille (52).

7. Machine à flux transversal selon la revendication 6, **caractérisée en ce que** les demies bagues (94, 96) sont limitées radialement vers l'intérieur par la culasse intérieure (107), dans laquelle un élément d'ailette de refroidissement (280) est inséré dans la culasse intérieure (107), lequel élément de nervure de refroidissement permet une émission de chaleur à partir des demies bagues (94, 96) au moyen d'ailettes de refroidissement (283) et permet les demies bagues (94, 96) sur une douille (52).
